# EUROPEAN PATENT SPECIFICATION

(11) **EP 3 388 752 B1**
(45) Date of publication and mention of the grant of the patent: **18.09.2019**
(21) Application number: 18166437.6
(22) Date of filing: 10.04.2018
(51) Int. Cl.: F24F 5/00, F24F 11/65, C09K 5/06, F24F 13/08, F28D 20/00, F28F 1/42, F28F 1/16

(54) **SYSTEM CONFIGURED TO ABSORB AND RELEASE HEAT**
SYSTEM ZUR ABSORBTION UND FREISETZUNG VON WÄRME
SYSTÈME CONFIGURÉ POUR ABSORBER ET LIBÉRER LA CHALEUR

(30) Priority: 11.04.2017 IT 201700040117
(43) Date of publication of application: 17.10.2018
(73) Proprietor: Composit Italia S.R.L., 00192 Roma (IT)
(72) Inventor: MAZZILLI, Luciano, 00192 Roma (IT)
(74) Representative: Santi, Filippo

(56) References cited:
- WO-A1-2009/101398
- WO-A1-2016/016428

## Description

The present invention relates to a system configured to absorb and release heat.

More particularly, the invention relates to the structure of a system capable of absorbing and releasing heat which can be connected to any compartment inside which at least one air conditioning unit is arranged, to reduce the energy consumption of said air conditioning unit.

By compartment any physical space delimited by walls having at least one opening, such as a shelter or a room or the like, is intended.

Currently, devices capable of absorbing and releasing heat are known.

A device capable of absorbing and releasing heat consists of a panel made of a phase change material or PCM (*Phase Change Material*).

A phase change material is a material capable of passing from solid to liquid and vice versa.

A phase change material is a solid material at room temperature. However, when the room temperature increases and becomes higher than a first threshold temperature (variable depending on the material), such a solid material passes to the liquid state, accumulating heat (i.e. latent heat of liquefaction) which is absorbed from the environment. When the room temperature is lower than a second threshold temperature, the phase change material passes from the liquid state to the solid state, and releases heat (i.e. latent heat of solidification).

The phase transition allows the phase change material to absorb a large amount of heat and keep its temperature substantially constant.

However, such a panel of known type is applied within an environment, such as a room.

A disadvantage is given by the fact that when the phase change material is in the liquid state, it is necessary to wait until the external temperature is such as to allow the transition from the liquid state to the solid state.

The object of the present invention is to overcome said disadvantage by providing a system configured to absorb and release heat, to be connected to a compartment, so as to create an exchange of air between the external environment and said compartment or between said compartment and said system or between the external environment and said system, so that the energy consumption of one or more air conditioning units arranged inside said compartment is reduced.

Document WO 2009/101398 A1 discloses a modular PCM system with a number of PCM packs which are thermally insulated by a housing from the module's surrounding medium. Spaces separate the PCM packs and form one or more channels for the flow of a fluid. The housing incorporates a fluid inlet and a fluid outlet such that, in use, fluid flows through the channels from the inlet to the outlet.

It is object of the present invention a system configured to absorb and release heat, connectable to a compartment in such a way as to have a part exposed to the external environment.

Said system comprises:
- a first chamber comprising:
   ∘ a first inlet for the passage of a first quantity of air from said compartment to said first chamber,
   ∘ first opening/closing means for opening/closing said first inlet in order to allow/prevent the passage of said first quantity of air through said first inlet,
   ∘ a first outlet for the passage of a second quantity of air from said first chamber to said compartment,
   ∘ second opening/closing means for opening/closing said first outlet in order to allow/prevent the passage of said second quantity of air through said first outlet,
   ∘ a second inlet for the passage of a third quantity of air from the outside to said first chamber,
   ∘ third opening/closing means for opening/closing said second inlet in order to allow/prevent the passage of said third amount of air through said second inlet,
   ∘ a second outlet for the passage of a fourth quantity of air from said first chamber to the outside,
   ∘ fourth opening/closing means for opening/closing said second outlet in order to allow/prevent the passage of said fourth quantity of air through said second outlet,
- a second chamber comprising:
   ∘ first ventilation means for generating a first flow of air and directing said first flow of air inside said second chamber,
   ∘ second ventilation means for generating a second flow of air and directing said second flow of air outside said second chamber,
   ∘ a heat storage device containing inside a mixture, where said heat storage device is arranged within said second chamber and said mixture comprises a phase change material capable of passing from a solid state to a liquid state, when the internal temperature of said second chamber is greater than a predetermined melting temperature, and from said liquid state to said solid state, when the internal temperature of said second chamber is less than a predetermined solidification temperature, said second chamber being arranged inside said first chamber in such a way as to divide said first chamber into a first part and a second part, where said first part comprises said first inlet, said second inlet as well as said first ventilation means, and said second part comprises said first outlet, said second outlet and said second ventilation means,
- first temperature measuring means for measuring a first temperature, where said first temperature is the internal temperature of said compartment,
- second temperature measuring means for measuring a second temperature, where said second temperature is the internal temperature of said second chamber, said second temperature measuring means being arranged within said second chamber,
- third temperature measuring means for measuring a third temperature, where said third temperature is the outdoor temperature,
- a control logic unit connected to each of said opening/closing means, as well as to each of said temperature measuring means and to each of said ventilation means, configured to:
   ∘ open/close said first inlet through said first opening/closing means,
   ∘ open/close said first outlet through said second opening/closing means,
   ∘ open/close said second inlet through said third opening/closing means,
   ∘ open/close said second outlet through said fourth opening/closing means,
   ∘ perform one or more comparisons between temperatures,
   ∘ close said first inlet and said first outlet, as well as said second inlet and said second outlet, and turn off said first ventilation means and said second ventilation means, when said first temperature is less than said predetermined melting temperature, and when said first temperature is less than said third temperature,
   ∘ open said second inlet and said first outlet and turn on said first ventilation means and said second ventilation means, when said first temperature is less than said predetermined melting temperature and said first temperature is greater than said third temperature,
   ∘ open said first inlet and said first outlet, close said second inlet and said second outlet, and turn on said first ventilation means and said second ventilation means, when said first temperature is greater than said predetermined melting temperature,
   ∘ close said first inlet and said first outlet, open said second inlet and said second outlet, and turn on said first ventilation means and said second ventilation means, when said second temperature is greater than said predetermined melting temperature of a predetermined value and said third temperature is greater than said predetermined solidification temperature,
   ∘ close said first inlet and said first outlet, open said second inlet and said second outlet, and turn on said first ventilation means and said second ventilation means, when said second temperature is greater than said predetermined melting temperature of a predetermined value and said third temperature is less than said predetermined solidification temperature.

Furthermore, said mixture can comprise a metal powder and a binder.

It is preferable that said phase change material is sodium sulfate decahydrate, said metal powder is aluminum powder, and said binder is clay.

In particular, said sodium sulfate decahydrate can be between 85% and 90% by weight, said aluminum powder is between 2% and 6% by weight, and said clay can be between 6% and 10% by weight.

More particularly, said sodium sulfate decahydrate is between 88% and 90% by weight, said aluminum powder can be between 3% and 6% by weight, and said clay can be between 6% and 7% by weight.

With reference to the heat storage device, said heat storage device can comprise at least one metal bar having a cavity containing said mixture.

It is preferable said at least one metal bar has a cross section formed by a circle and at least one radial segment, where said at least one radial segment comprises a first portion extending from said circle outwardly for a predetermined length and a second portion extending from said circle inwardly for a predetermined second length.

In particular, said cross section can comprise a plurality of radial segments, equidistant from each other.

With reference to said first ventilation means and said second ventilation means, said first ventilation means can be connected to a first wall of said second chamber and said second ventilation means can be connected to a second wall of said second chamber, opposite to said first wall. In particular, said first ventilation means and said second ventilation means can be arranged along a first axis, and said at least one metal bar can have a longitudinal axis and be arranged inside said second chamber between said first wall and said second wall in such a way that said longitudinal axis is parallel to said first axis.

In a first alternative, said second chamber can comprise further first ventilation means, connected to said first wall, and further second ventilation means, connected to said second wall, where said further first ventilation means and said further second ventilation means can be arranged along a second axis, parallel to said first axis.

The present invention will be now described, for illustrative, but not limitative purposes, according to its embodiment, making particular reference to the enclosed figures, wherein:
Figure 1 schematically shows the system, according to the invention, connected to the entrance of a shelter, inside which a telecommunication apparatus and an air conditioning unit are arranged;
Figure 2A is a first schematic view of the system object of the invention;
Figure 2B is a second schematic view of the system object of the invention, from which a portion has been removed to show first ventilation means and second ventilation means of which said system is provided;
Figure 3 schematically shows a logic control unit electrically connected to first opening/closing means, second opening/closing means, third opening/closing means, fourth opening/closing means, first ventilation means and second means of ventilation, as well as to first temperature measurement means, second temperature measurement means and a third temperature measurement means;
Figures 4A-4D schematically show a respective air path through the system object of the invention;
Figure 5 shows a table showing the values of the predetermined melting temperature and of the predetermined solidification temperature of the sodium decahydrate sulphate;
Figure 6A shows the second chamber of the system according to the invention, from which a portion has been removed to show the heat storage device comprising a plurality of metal bars;
Figure 6B shows the cross section of a metal bar of the heat storage device of Figure 6A;
Figure 7 shows a variant of the system object of the invention.

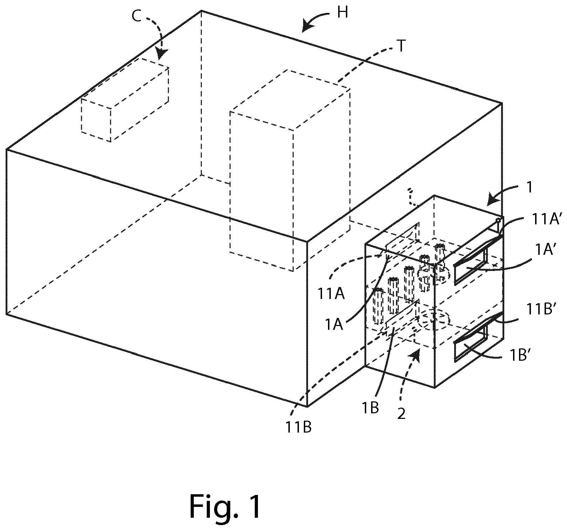

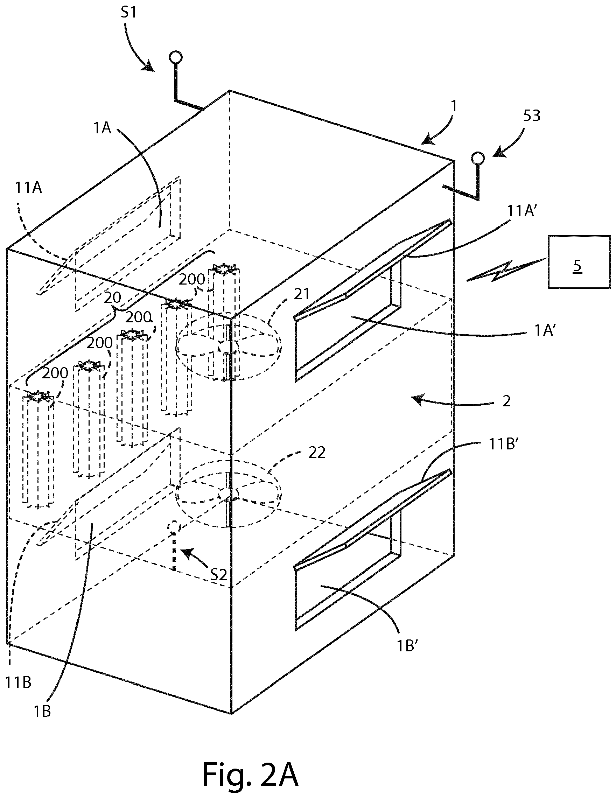

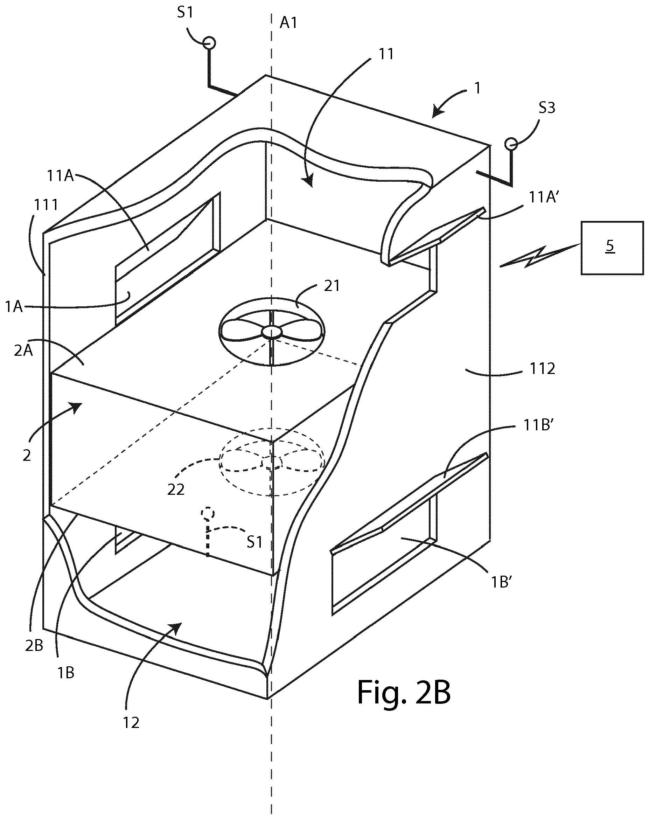

With particular reference to the Figures 1,2A,2B a system 1 configured to absorb and release heat is disclosed.

In the example being disclosed, said system is configured to be connected to the entrance of a shelter H, inside which a telecommunication apparatus T and an air conditioning unit C are arranged.

In particular, said system is connectable to said shelter H in such a way as to have a part exposed to the environment (i.e. external environment).

However, said system can be configured to be connected to any compartment, different from a shelter, without thereby departing from the scope of the invention.

Said system comprises:
- a first chamber 1 comprising:
   ∘ a first inlet 1A for the passage of a first quantity of air from said compartment H to said first chamber 1,
   ∘ first opening/closing means 11A for opening/closing said first inlet 1A in order to allow/prevent the passage of said first quantity of air through said first inlet 1A,
   ∘ a first outlet 1B for the passage of a second quantity of air from said first chamber 1 to said compartment H,
   ∘ second opening/closing means 11B for opening/closing said first outlet 1B in order to allow/prevent the passage of said second quantity of air through said first outlet 1B,
   ∘ a second inlet 1A' for the passage of a third quantity of air from the outside to said first chamber 1,
   ∘ third opening/closing means 11A' for opening/closing said second inlet 1A' in order to allow/prevent the passage of said third amount of air through said second inlet 1A',
   ∘ a second outlet 1B' for the passage of a fourth quantity of air from said first chamber 1 to the outside,
   ∘ fourth opening/closing means 11B' for opening/closing said second outlet 1B' in order to allow/prevent the passage of said fourth quantity of air through said second outlet 1B'.

Said first inlet 1A and said first outlet 1B are arranged on a first wall 111 of said first chamber 1, and said second inlet 1A' and said second outlet 1B' are arranged on a second wall 112 of said first chamber 1.

In the embodiment being disclosed, said second wall 112 is opposite to said first wall 111.

As said, in the embodiment being disclosed, said system is connected to the entrance of the shelter H. In particular, said system is connected to said shelter H in such a way that the first wall 111 of said first chamber is facing the inside of said shelter H and said second wall is exposed to the external environment.

In other words, said system is connectable to said shelter H in such a way as to have a part exposed to the external environment and a further part facing the inside of the shelter.

However, the shelter H could have a first opening and a second opening and said system could be connected to said shelter in such a way that said first inlet 1A is connected to said first opening of said shelter H and said first outlet 1B is connected to said second opening, without thereby departing from the scope of the invention.

It is important that a double exchange of air between said system and said compartment H is guaranteed.

Furthermore, a second chamber 2 is arranged inside said first chamber and comprises:
∘ first ventilation means 21 for generating a first flow of air and directing said first flow of air inside said second chamber 2, connected to a first wall 2A of said second chamber 2,
∘ second ventilation means 22 for generating a second flow of air and directing said second flow of air outside said second chamber 2, connected to a second wall 2B of said second chamber 2,
∘ a heat storage device 20 containing inside a mixture, where said heat storage device 20 is arranged within said second chamber 2 and said mixture comprises a phase change material capable of passing from a solid state to a liquid state, when the internal temperature of said second chamber 2 is greater than a predetermined melting temperature T_{f}, and from said liquid state to said solid state, when the internal temperature of said second chamber 2 is less than a predetermined solidification temperature Tₛ.

In particular, in the embodiment being disclosed, said second wall 2B (to which said second ventilation means 22 are connected) is opposite to said first wall 2A (to which said first ventilation means 21 are connected) and said heat storage device 20 is arranged between said first ventilation means 21 and said second ventilation means 22.

Furthermore, said second chamber 2 is arranged inside said first chamber 1 in such a way that to divide said first chamber 1 into two parts: a first part 11, arranged above said second chamber 2, and a second part 12, arranged below said second chamber 12.

Said first part 11 comprises said first inlet 1A, said second inlet 1A', and said first ventilation means 21, and said second part 12 comprises said first outlet 1B, said second outlet 1B' and said second ventilation means 22, where said second part 12 is contiguous to said first part 11.

Said system is configured to measure different temperatures.

To this end said system comprises:
- first temperature measuring means S1 for measuring a first temperature t₁, where said first temperature t₁ is the internal temperature of said shelter H,
- second temperature measuring means S2 for measuring a second temperature t₂, where said second temperature t₂ is the internal temperature of said second chamber 2, and said second temperature measuring means S2 are arranged within said second chamber 2,
- third temperature measuring means S3 for measuring a third temperature t₃, where said third temperature t₃ is the outdoor temperature (i.e. the temperature of the external environment).

In particular, in the embodiment being disclosed, said system is connected to the entrance of the shelter H in such a way as to have a part facing the internal environment of the shelter H, to which said first temperature measuring means S1 are connected, and a part exposed to the external environment, to which said third temperature measuring means S3 are connected.

More particularly, said temperature measuring means S1 are connected to a first wall of said first chamber 1 and said third temperature measuring means S3 are connected to a second wall of said first chamber 1, different from said first wall. In the embodiment being disclosed, said second wall is opposite to said first wall.

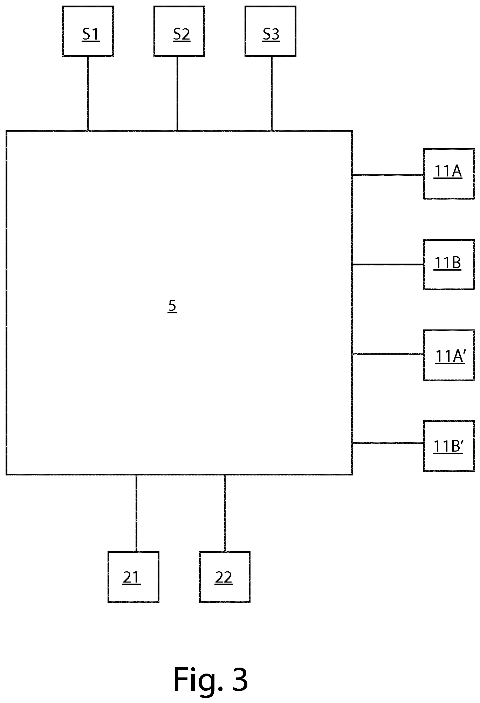

Furthermore, said system comprises a control logic unit 5 connected to each of said opening/closing means 11A, 11B, 11A', 11B', as well as to each of said ventilation means 21,22 and to each of said temperature measuring means S1, S2, S3 (Figure 3).

Said control logic unit 5 is configured to:
∘ open/close said first inlet 1A through said first opening/closing means 11A,
∘ open/close said first outlet 1B through said second opening/closing means 11B,
∘ open/close said second inlet 1A' through said third opening/closing means 11A',
∘ open/close said second outlet 1B' through said fourth opening/closing means 11B'.

Furthermore, said control logic unit 5 is configured to:
∘ perform one or more comparisons between temperatures,
∘ close said first inlet 1A and said first outlet 1B, as well as said second inlet 1A' and said second outlet 1B', and turn off said first ventilation means 21 and said second ventilation means 22, when said first temperature t₁ is less than said predetermined melting temperature T_{f} and when said first temperature t₁ is less than said third temperature t₃,
∘ open said second inlet 1A' and said first outlet 1B and turn on said first ventilation means 21 and said second ventilation means 22, when said first temperature t₁ is less than said predetermined melting temperature T_{f} and said first temperature t₁ is greater than said third temperature t₃,
∘ open said first inlet 1A and said first outlet 1B, close said second inlet 1A' and said second outlet 1B', and turn on said first ventilation means 21 and said second ventilation means 22, when said first temperature t₁ is greater than said predetermined melting temperature T_{f},
∘ close said first inlet 1A and said first outlet 1B, open said second inlet 1A' and said second outlet 1B', and turn on said first ventilation means 21 and said second ventilation means 22, when said second temperature t₂ is greater than said predetermined melting temperature T_{f} of a predetermined value and said third temperature t₃ is greater than said predetermined solidification temperature Tₛ,
∘ close said first inlet 1A and said first outlet 1B, open said second inlet 1A' and said second outlet 1B', and turn on said first ventilation means 21 and said second ventilation means 22, when said second temperature t₂ is greater than said predetermined melting temperature T_{f} of a predetermined value and said third temperature t₃ is less than said predetermined solidification temperature Tₛ.

When said first temperature t₁ is less than said predetermined melting temperature T_{f} and when said first temperature t₁ is less than said third temperature t₃, no quantity of air enters the first chamber (by means of one of the two inlets) and exits from the first chamber (by means of one of the two outlets).

In this situation, the system is not operating.

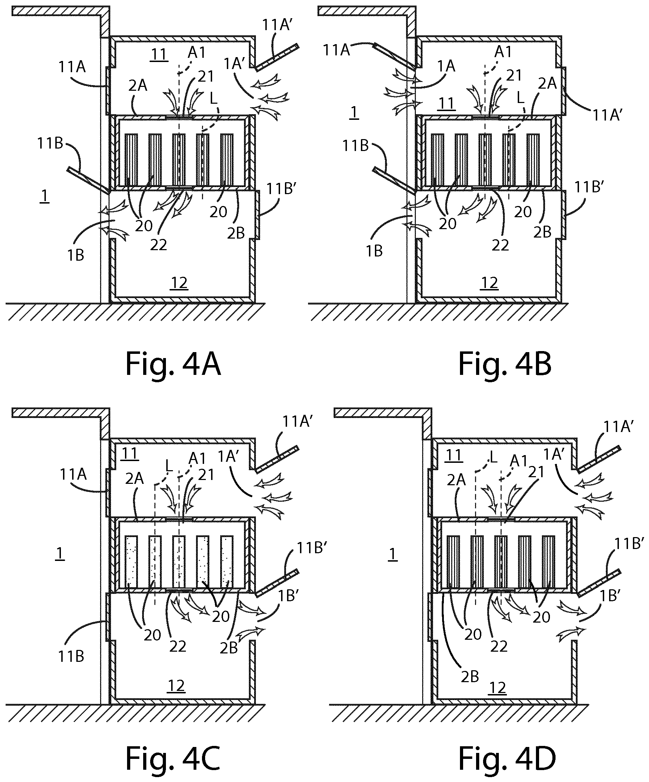

When said first temperature t₁ is less than said predetermined melting temperature T_{f} and said first temperature t₁ is greater than said third temperature t₃, a quantity of air enters inside the first part 11 of the first chamber 1 by means of the second inlet 1A', passes through the second chamber 2, and enters the second part 12 of the first chamber 1 to exits from the latter through the first outlet 1B (Figure 4A).

In particular, the quantity of air entering the second part of the first chamber 1 through said first outlet 1B enters the shelter H.

In this second situation, the phase change material is in the solid state.

However, advantageously, the quantity of air exiting from the first outlet 1B and enters the shelter H allows the internal environment of the shelter H to be cooled.

This allows to reduce the energy consumption of the air conditioning unit arranged inside the shelter H.

When said first temperature t₁ is greater than said predetermined melting temperature T_{f}, a quantity of air enters inside the first part 11 of the first chamber 1 through the first inlet 1A, passing through the second chamber 2, and enters the second part 12 of the first chamber 1 to exit from the latter through the first outlet 1B (Figure 4B).

Similar to the second situation, in this third situation, the quantity of air exiting from the second part of the first chamber 1 through said first outlet 1B enters the shelter H.

In this third situation, the phase change material passes from the solid state to the liquid state, as the phase change material absorbed the heat contained in the quantity of air entered the second chamber 2.

Consequently, the quantity of air exiting from the first outlet 1B and enters the shelter H allows to the internal environment of the shelter H to be cooled.

This allows to reduce the energy consumption of the air conditioning unit arranged inside the shelter H.

When said second temperature t₂ is greater than said predetermined melting temperature T_{f} of a predetermined value and said third temperature t₃ is less than said predetermined solidification temperature Tₛ, a quantity of air enters inside the first part 11 of said first chamber 1 through the second inlet 1A', passing through the second chamber 2, and enters the second part 12 of the first chamber 1 to exit from the latter through the second outlet 1B' (Figure 4C).

In particular, the quantity of air exiting from the second part 12 of the first chamber 1 through said second outlet 1B' spreads in the external environment.

In this fourth situation, the phase change material is still in the liquid state but it is not able to absorb the heat entering the second chamber 2.

When said second temperature t₂ is greater than said predetermined melting temperature T_{f} of a predetermined value and said third temperature t₃ is less than said predetermined solidification temperature Tₛ, a quantity of air enters inside the first chamber 1 through the second inlet 1A', passing through the second chamber 2, and enters the second part 12 of the first chamber 1 to exit from the latter through the second outlet 1B' (Figure 4D).

Similar to the fourth situation, in this fifth situation, the quantity of air exiting from the second part 12 of the first chamber 1 through said second outlet 1B' spreads in the external environment.

In particular, a quantity of heat absorbed from the phase change material is released from the phase change material itself, so that said quantity of heat is released to the external environment.

In this fifth situation, the phase change material passes from the liquid state to the solid state, releasing said quantity of heat to the external environment.

Apart from the first situation, in which the system is not operating, said first ventilation means 21 and said second ventilation means 22 are turned on.

Said first ventilation means 21 direct the quantity of air entering the first part 11 of the first chamber 1 (through one of the two inlets 1A, 1A') inside the second chamber 2 and said second ventilation means 22 direct the quantity of air that is entered the second chamber 2 inside the second part 12 of the first chamber 1.

In other words, apart from the first situation in which the system is not operating, depending on the temperature values (i.e. the value of the first temperature, the value of the second temperature and the value of the third temperature), one of the two inlets and one of the two outlets of the first chamber are open.

The inlet open allows a quantity of air to enter the first part 11 of the first chamber 1.

Such a quantity of air through said first ventilation means 21 is directed inside the second chamber 2.

Inside said second chamber 2, the heat contained in said quantity of air can be absorbed by the phase change material.

In particular, the heat is absorbed until the phase change material is able to absorb heat.

In fact, when the phase change material passes from the solid state to the liquid state, said phase change material will absorb over time a quantity of heat that decreases until it is no longer able to absorb heat.

Once in the liquid state, said phase change material, thanks to the temperatures involved (see the temperatures referred to the fifth situation described above) begins to release a quantity of heat, releasing it to the external environment.

Finally, the quantity of air inside the second chamber 2 is directed through said second ventilation means 22 inside the second part 12 of the first chamber 1, from which it exits through one of the two outlets.

When said quantity of air enters the shelter H through said first outlet 1B, it allows the internal environment of the shelter to be cooled

In the embodiment being disclosed, said phase change material is the sodium sulfate decahydrate.

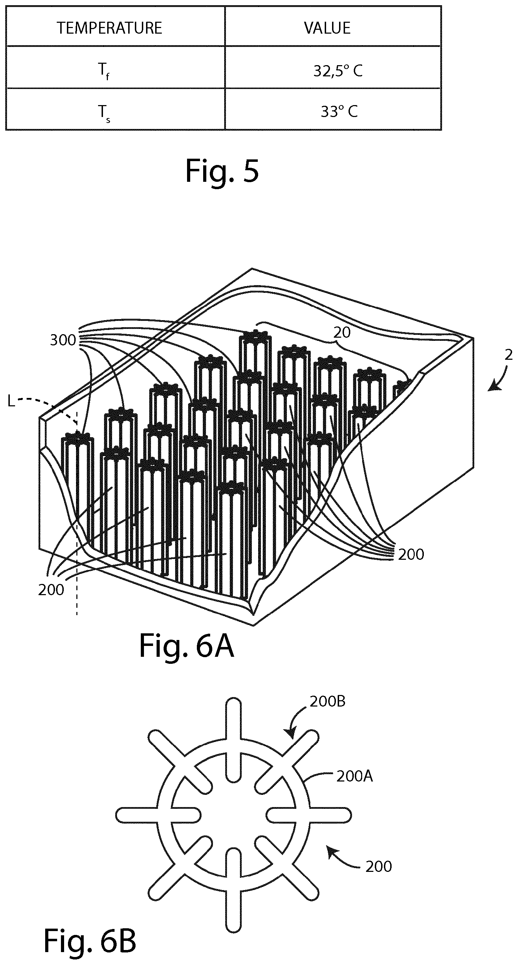

As can be seen from Figure 5, the table shows the temperature values of the predetermined melting temperature T_{f} and of the predetermined solidification temperature Tₛ of said sodium sulfate decahydrate.

The melting temperature is 32,5°C and the solidification temperature is 33 °C.

With reference to the case in which said second temperature t₂ can be greater than said predetermined melting temperature T_{f} of a predetermined value, it is preferable that said predetermined value is 4°C.

Furthermore, said mixture comprises a metal powder and a binder.

In the embodiment being disclosed, said metal powder is an aluminum powder and said binder is clay.

With reference to the mixture, said sodium sulfate decahydrate can be between 85% and 90% by weight, said aluminum powder can be between 2% and 6% by weight, and said clay is between 6% and 10% by weight.

In particular, in the embodiment being disclosed, said sodium sulfate decahydrate is between 88% and 90% by weight, said aluminum powder is between 3% and 6% by weight, said clay is between 6% and 7% by weight.

More particularly, in the embodiment, said sodium sulfate decahydrate is 90% by weight, said aluminum powder is 3% by weight, said clay is 7% by weight.

In the embodiment being disclosed, said heat storage device 20 comprises one or more metal bars 200, each of which has a cavity for containing said mixture.

In particular, in the embodiment being described, each metal bar is a hollow metal bar having a first end closed by a first closure element, where said closure element is coupable in a removable manner to said first end, and a second end, opposite to said first end, closed by a second closure element coupled in a removable manner to said second end.

As can be seen from Figures 6A, 6B, it is preferable that each metal bar 200 contained in the second chamber 2 has a cross section formed by a circle 200A and one or more radial segments 200B, where each radial segment 200B is arranged along said circle 200A and has a first end inside said circle 200A and a second end outside said circle 200A.

In other words, each radial segment 200B comprises a first portion extending from said circle 200A outwardly for a predetermined length and a second portion extending from said circle 200A inwardly (i.e. towards the centre of the circle itself) for a predetermined second length

The particular cross section of the metal bars 200 has been designed to compensate for the reduced thermal conductivity of the phase change material present inside the metal bars themselves.

In fact, thanks to the presence of said radial segments, on the one hand, the heat propagates from the outside towards the inside of the metal bars so as to reach the innermost part of each metal bar, until the material changing phase reaches the melting temperature, on the other hand, the heat propagates from the inside towards the outside of the metal bars until the phase change material reaches the solidification temperature.

In particular, in the presence of said radial segments, the heat reaches more easily the inner part of each metal bar inside which the phase change material is present.

In the embodiment being disclosed, said heat storage device 20 comprises a plurality of metal bars, each having a cross section formed by a circle and a plurality of radial segments.

Furthermore, said first ventilation means 21 and said second ventilation means 22 are arranged along a first axis A1 and each metal bar 200 has a longitudinal axis L and is arranged inside said second chamber 2 in such a way that the longitudinal axis L of each metal bar 200 is parallel to said first axis A1.

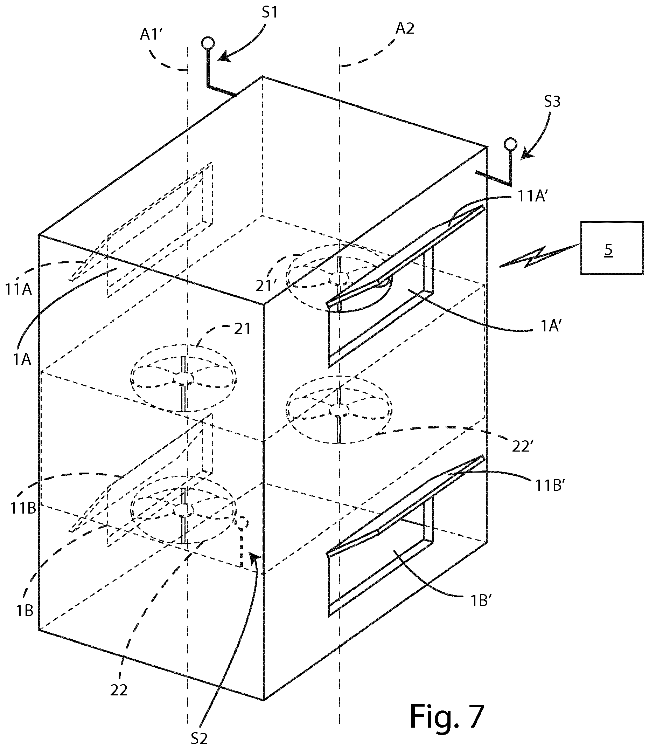

In a variant, shown in Figure 7, said second chamber 2 can comprise further first ventilation means 21', connected to the first wall 2A of said second chamber 2, and further second ventilation means 22', connected to the second wall 2B of said second chamber 2.

Said first ventilation means 21 and said second ventilation means 22 are arranged along a first axis A1', and said further first ventilation means 21' and said further second ventilation means 22' are arranged along a second axis A2, where said first axus A1' and said second axis A2 are parallel to each other. Furthermore, the longitudinal axis L of each metal bar 200 is parallel to said first axis A1' and said second axis A2.

Advantageously, the system, object of the invention, allows a compartment to be cooled, with a consequent energy consumption of the air conditioning unit(s) arranged inside said compartment.

The present invention has been described for illustrative, but not limitative purposes, according to its preferred embodiment, but it is to be understood that variations and/or modifications can be carried out by a skilled in the art, without departing from the scope thereof, as defined according to enclosed claims.

## Claims

1. System configured to absorb and release heat, connectable to a compartment (H) in such a way as to have a part exposed to the external environment, said system comprising:
- a first chamber (1) comprising:
∘ a first inlet (1A) for the passage of a first quantity of air from said compartment (H) to said first chamber (1),
∘ first opening/closing means (11A) for opening/closing said first inlet (1A) in order to allow/prevent the passage of said first quantity of air through said first inlet (1A),
∘ a first outlet (1B) for the passage of a second quantity of air from said first chamber (1) to said compartment (H),
∘ second opening/closing means (11B) for opening/closing said first outlet (1B) in order to allow/prevent the passage of said second quantity of air through said first outlet (1B),
∘ a second inlet (1A') for the passage of a third quantity of air from the outside to said first chamber (1),
∘ third opening/closing means (11A') for opening/closing said second inlet (1A') in order to allow/prevent the passage of said third amount of air through said second inlet (1A'),
∘ a second outlet (1B') for the passage of a fourth quantity of air from said first chamber (1) to the outside,
∘ fourth opening/closing means (11B') for opening/closing said second outlet (1B') in order to allow/prevent the passage of said fourth quantity of air through said second outlet (1B'),
- a second chamber (2) comprising:
∘ first ventilation means (21) for generating a first flow of air and directing said first flow of air inside said second chamber (2),
∘ second ventilation means (22) for generating a second flow of air and directing said second flow of air outside said second chamber (2),
∘ a heat storage device (20) containing inside a mixture, where said heat storage device (20) is arranged within said second chamber (2) and said mixture comprises a phase change material capable of passing from a solid state to a liquid state, when the internal temperature of said second chamber (2) is greater than a predetermined melting temperature (T_{f}), and from said liquid state to said solid state, when the internal temperature of said second chamber (2) is less than a predetermined solidification temperature (Tₛ),
said second chamber (2) being arranged inside said first chamber (1) in such a way as to divide said first chamber (1) into a first part (11) and a second part (12), where said first part (11) comprises said first inlet (1A), said second inlet (1A') as well as said first ventilation means (21), and said second part (12) comprises said first outlet (1B), said second outlet (1B') and said second ventilation means (22),
- first temperature measuring means (S1) for measuring a first temperature t₁, where said first temperature t₁ is the internal temperature of said compartment (H),
- second temperature measuring means (S2) for measuring a second temperature t₂, where said second temperature t₂ is the internal temperature of said second chamber (2), said second temperature measuring means (S2) being arranged within said second chamber (2),
- third temperature measuring means (S3) for measuring a third temperature t₃, where said third temperature t₃ is the outdoor temperature (T3),
- a control logic unit (5) connected to each of said opening/closing means (11A, 11B, 11A', 11B'), as well as to each of said temperature measuring means (S1, S2, S3) and to each of said ventilation means (21,22), and configured to:
∘ open/close said first inlet (1A) through said first opening/closing means (11A),
∘ open/close said first outlet (1B) through said second opening/closing means (11B),
∘ open/close said second inlet (1A') through said third opening/closing means (11A'),
∘ open/close said second outlet (1B') through said fourth opening/closing means (11B'),
∘ perform one or more comparisons between temperatures,
∘ close said first inlet (1A) and said first outlet (1B), as well as said second inlet (1A') and said second outlet (1B'), and turn off said first ventilation means (21) and said second ventilation means (22), when said first temperature t₁ is less than said predetermined melting temperature (T_{f}), and when said first temperature t₁ is less than said third temperature t₃,
∘ open said second inlet (1A') and said first outlet (1B) and turn on said first ventilation means (21) and said second ventilation means (22), when said first temperature t₁ is less than said predetermined melting temperature (T_{f}) and said first temperature t₁ is greater than said third temperature t₃,
∘ open said first inlet (1A) and said first outlet (1B), close said second inlet (1A') and said second outlet (1B'), and turn on said first ventilation means (21) and said second ventilation means (22), when said first temperature t₁ is greater than said predetermined melting temperature (T_{f})
∘ close said first inlet (1A) and said first outlet (1B), open said second inlet (1A') and said second outlet (1B'), and turn on said first ventilation means (21) and said second ventilation means (22), when said second temperature t₂ is greater than said predetermined melting temperature (T_{f}) of a predetermined value and said third temperature t₃ is greater than said predetermined solidification temperature (Tₛ),
∘ close said first inlet (1A) and said first outlet (1B), open said second inlet (1A') and said second outlet (1B'), and turn on said first ventilation means (21) and said second ventilation means (22), when said second temperature t₂ is greater than said predetermined melting temperature (T_{f}) of a predetermined value and said third temperature t₃ is less than said predetermined solidification temperature (Tₛ).

2. System according to the previous claim, **characterized in that** said mixture comprises a metal powder and a binder.

3. System according to the previous claim, **characterized in that** said phase change material is sodium sulfate decahydrate, said metal powder is aluminum powder, and said binder is clay.

4. System according to the previous claim, **characterized in that** said sodium sulfate decahydrate is between 85% and 90% by weight, said aluminum powder is between 2% and 6% by weight, and said clay is between 6% and 10% by weight.

5. System according to the previous claim, **characterized in that** said sodium sulfate decahydrate is between 88% and 90% by weight, said aluminum powder is between 3% and 6% by weight, and said clay is between 6% and 7% by weight.

6. System according to any of the previous claims, **characterized in that** said heat storage device (20) comprises at least one metal bar (200) having a cavity containing said mixture.

7. System according to the previous claim, **characterized in that** said at least one metal bar has a cross section formed by a circle (200A) and at least one radial segment (200B), where said at least one radial segment (200B) comprises a first portion extending from said circle (200A) outwardly for a predetermined length and a second portion extending from said circle (200A) inwardly for a predetermined second length.

8. System according to the previous claim, **characterized in that** said cross section has a plurality of radial segments (200B), equidistant from each other.

9. System according to any one of claims 6-8, **characterized in that** said first ventilation means (21) are connected to a first wall (2A) of said second chamber (2) and said second ventilation means (22) are connected to a second wall (2B) of said second chamber (2), opposite to said first wall (2A), said first ventilation means (21) and said second ventilation means (22) being arranged along a first axis (A1, A1'), **in that** said at least one metal bar (200) has a longitudinal axis (L) and is arranged inside said second chamber (2) between said first wall (2A) and said second wall (2B) in such a way that said longitudinal axis (L) is parallel to said first axis (A1, A1').

10. System according to claim 9, **characterized in that** said second chamber (2) comprises further first ventilation means (21'), connected to said first wall (2A), and further second ventilation means (22'), connected to said second wall (2B), where said further first ventilation means (21') and said further second ventilation means (22) are arranged along a second axis (A2), parallel to said first axis (A1').

## Patentansprüche

1. System, das konfiguriert ist, Wärme zu absorbieren und freizusetzen, das mit einem Abteil (H) auf solche Weise verbindbar ist, dass ein Teil der Außenumgebung ausgesetzt ist, das System umfassend:
- eine erste Kammer (1), umfassend:
∘ einen ersten Einlass (1A) für den Durchlass einer ersten Menge an Luft vom Abteil (H) zur ersten Kammer (1),
∘ erste Öffnungs-/Schließungsmittel (11A) zum Öffnen/Schließen des ersten Einlasses (1A), um den Durchlass der ersten Menge an Luft durch den ersten Einlass (1A) zu erlauben/verhindern,
∘ einen ersten Auslass (1B) für den Durchlass einer zweiten Menge an Luft von der ersten Kammer (1) zum Abteil (H),
∘ zweite Öffnungs-/Schließungsmittel (11B) zum Öffnen/Schließen des ersten Auslasses (1B), um den Durchlass der zweiten Menge an Luft durch den ersten Auslass (1B) zu erlauben/verhindern,
∘ einen zweiten Einlass (1A') für den Durchlass einer dritten Menge an Luft von der Außenseite zur ersten Kammer (1),
∘ dritte Öffnungs-/Schließungsmittel (11A') zum Öffnen/Schließen des zweiten Einlasses (1A'), um den Durchlass der dritten Menge an Luft durch den zweiten Einlass (1A') zu erlauben/verhindern,
∘ einen zweiten Auslass (1B') für den Durchlass einer vierten Menge an Luft von der ersten Kammer (1) zur Außenseite,
∘ vierte Öffnungs-/Schließungsmittel (11B') zum Öffnen/Schließen des zweiten Auslasses (1B'), um den Durchlass der vierten Menge an Luft durch den zweiten Auslass (1B') zu erlauben/verhindern,
- eine zweite Kammer (2), umfassend:
∘ erste Belüftungsmittel (21) zum Erzeugen eines ersten Luftstroms und Leiten des ersten Luftstroms in die zweite Kammer (2),
∘ zweite Belüftungsmittel (22) zum Erzeugen eines zweiten Luftstroms und Leiten des zweiten Luftstroms aus der zweiten Kammer (2),
∘ eine Wärmespeichervorrichtung (20), die innen eine Mischung beinhaltet, wo die Wärmespeichervorrichtung (20) innerhalb der zweiten Kammer (2) angeordnet ist und die Mischung ein Phasenänderungsmaterial umfasst, das fähig ist, von einem festen Zustand in einen flüssigen Zustand überzugehen, wenn die Innentemperatur der zweiten Kammer (2) größer als eine vorbestimmte Schmelztemperatur (T_{f}) ist, und vom flüssigen Zustand in den festen Zustand, wenn die Innentemperatur der zweiten Kammer (2) weniger als eine vorbestimmte Erstarrungstemperatur (Tₛ) ist,
wobei die zweite Kammer (2) in der ersten Kammer (1) auf solche Weise angeordnet ist, dass die erste Kammer (1) in einen ersten Einlass (11) und einen zweiten Einlass (12) geteilt wird, wo der erste Teil (11) den ersten Einlass (1A), den zweiten Einlass (1A') wie auch die ersten Belüftungsmittel (21) umfasst und der zweite Teil (12) den ersten Auslass (1B), den zweiten Auslass (1B') und die zweiten Belüftungsmittel (22) umfasst,
- erste Temperaturmessungsmittel (S1) zum Messen einer ersten Temperatur t₁, wo die erste Temperatur t₁ die Innentemperatur des Abteils (H) ist,
- zweite Temperaturmessungsmittel (S2) zum Messen einer zweiten Temperatur t₂, wo die zweite Temperatur t₂ die Innentemperatur der zweiten Kammer (2) ist, wobei die zweiten Temperaturmessungsmittel (S2) innerhalb der zweiten Kammer (2) angeordnet sind,
- dritte Temperaturmessungsmittel (S3) zum Messen einer dritten Temperatur t₃, wo die dritte Temperatur t₃ die Außentemperatur (T3) ist,
- eine Steuerlogikeinheit (5), die mit jedem der Öffnungs-/Schließungsmitteln (11A, 11B, 11A', 11B') verbunden ist, wie auch mit jedem der Temperaturmessungsmittel (S1, S2, S3) und jedem der Belüftungsmittel (21, 22) und konfiguriert ist zum:
∘ Öffnen/Schließen des ersten Einlasses (1A) durch die ersten Öffnungs-/Schließungsmittel (11A),
∘ Öffnen/Schließen des ersten Auslasses (1B) durch die zweiten Öffnungs-/Schließungsmittel (11B),
∘ Öffnen/Schließen des zweiten Einlasses (1A') durch die dritten Öffnungs-/Schließungsmittel (11A'),
∘ Öffnen/Schließen des zweiten Auslasses (1B') durch die vierten Öffnungs-/Schließungsmittel (11B').
∘ Ausführen eines Vergleichs oder mehrerer Vergleiche zwischen Temperaturen,
o Schließen des ersten Einlasses (1A) und des ersten Auslasses (1B), wie auch des zweiten Einlasses (1A') und des zweiten Auslasses (1B') und Ausschalten der ersten Belüftungsmittel (21) und der zweiten Belüftungsmittel (22), wenn die erste Temperatur t₁ weniger als die vorbestimmte Schmelztemperatur (T_{f}) ist und wenn die erste Temperatur t₁ weniger als die dritte Temperatur t₃ ist,
∘ Öffnen des zweiten Einlasses (1A') und des ersten Auslasses (1B) und Einschalten der ersten Belüftungsmittel (21) und der zweiten Belüftungsmittel (22), wenn die erste Temperatur t₁ weniger als die vorbestimmte Schmelztemperatur (T_{f}) ist und die erste Temperatur t₁ größer als die dritte Temperatur t₃ ist,
∘ Öffnen des ersten Einlasses (1A) und des ersten Auslasses (1B), Schließen des zweiten Einlasses (1A') und des zweiten Auslasses (1B') und Einschalten der ersten Belüftungsmittel (21) und der zweiten Belüftungsmittel (22), wenn die erste Temperatur t₁ größer als die vorbestimmte Schmelztemperatur (T_{f}) ist,
∘ Schließen des ersten Einlasses (1A) und des ersten Auslasses (1B), Öffnen des zweiten Einlasses (1A') und des zweiten Auslasses (1B') und Einschalten der ersten Belüftungsmittel (21) und der zweiten Belüftungsmittel (22), wenn die zweite Temperatur t₂ größer als die vorbestimmte Schmelztemperatur (T_{f}) eines vorbestimmten Werts ist und die dritte Temperatur t₃ größer als die vorbestimmte Erstarrungstemperatur (Tₛ) ist,
∘ Schließen des ersten Einlasses (1A) und des ersten Auslasses (1B), Öffnen des zweiten Einlasses (1A') und des zweiten Auslasses (1B') und Einschalten der ersten Belüftungsmittel (21) und der zweiten Belüftungsmittel (22), wenn die zweite Temperatur t₂ größer als die vorbestimmte Schmelztemperatur (T_{f}) eines vorbestimmten Werts ist und die dritte Temperatur t₃ weniger als die vorbestimmte Erstarrungstemperatur (Tₛ) ist.

2. System nach dem vorstehenden Anspruch, **dadurch gekennzeichnet, dass** die Mischung ein Metallpulver und ein Bindemittel umfasst.

3. System nach dem vorstehenden Ansprüche, **dadurch gekennzeichnet, dass** das Phasenänderungsmaterial Natriumsulfatdecahydrat ist, das Metallpulver Aluminiumpulver ist und das Bindemittel Ton ist.

4. System nach dem vorstehenden Anspruch, **dadurch gekennzeichnet, dass** das Natriumsulfatdecahydrat zwischen 85 und 90 Gewichtsprozent ist, das Aluminiumpulver zwischen 2 und 6 Gewichtsprozent ist und der Ton zwischen 6 und 10 Gewichtsprozent ist.

5. System nach dem vorstehenden Anspruch, **dadurch gekennzeichnet, dass** das Natriumsulfatdecahydrat zwischen 88 und 90 Gewichtsprozent ist, das Aluminiumpulver zwischen 3 und 6 Gewichtsprozent ist und der Ton zwischen 6 und 7 Gewichtsprozent ist.

6. System nach einem der vorstehenden Ansprüche, **dadurch gekennzeichnet, dass** die Wärmespeichervorrichtung (20) mindestens eine Metallstange (200) mit einem Hohlraum, der die Mischung beinhaltet, umfasst.

7. System nach dem vorstehenden Anspruch, **dadurch gekennzeichnet, dass** die mindestens eine Metallstange einen Querschnitt, der aus einem Kreis (200A) gebildet wird, und mindestens ein radiales Segment (200B) hat, wo das mindestens eine radiale Segment (200B) einen ersten Abschnitt, der sich vom Kreis (200A) für eine vorbestimmte Länge nach außen erstreckt, und einen zweiten Abschnitt, der sich vom Kreis (200A) für eine vorbestimmte zweite Länge nach innen erstreckt, umfasst.

8. System nach dem vorstehenden Anspruch, **dadurch gekennzeichnet, dass** der Querschnitt eine Vielzahl radialer Segmente (200B) hat, die jeweils gleich voneinander beabstandet sind.

9. System nach einem der Ansprüche 6-8, **dadurch gekennzeichnet, dass** die ersten Belüftungsmittel (21) mit einer ersten Wand (2A) der zweiten Kammer (2) verbunden sind und die zweiten Belüftungsmittel (22) mit einer zweiten Wand (2B) der zweiten Kammer (2) gegenüber der ersten Wand (2A) verbunden sind, wobei die ersten Belüftungsmittel (21) und die zweiten Belüftungsmittel (22) entlang einer ersten Achse (A1, A1') angeordnet sind, in der die mindestens eine Metallstange (200) eine Längsachse (L) hat und innerhalb der zweiten Kammer (2) zwischen der ersten Wand (2A) und der zweiten Wand (2B) auf solche Weise angeordnet ist, dass die Längsachse (L) parallel zur ersten Achse (A1, A1') ist.

10. System nach Anspruch 9, **dadurch gekennzeichnet, dass** die zweite Kammer (2) weitere erste Belüftungsmittel (21'), die mit der ersten Wand (2A) verbunden sind, und weitere zweite Belüftungsmittel (22'), die mit der zweiten Wand (2B) verbunden sind, umfasst, wo die weiteren ersten Belüftungsmittel (21') und die weiteren zweiten Belüftungsmittel (22) entlang einer zweiten Achse (A2) parallel zur ersten Achse (A1') angeordnet sind.

## Revendications

1. Système configuré pour absorber et libérer de la chaleur, pouvant être connecté à un compartiment (H) de manière à exposer une partie à l'environnement extérieur, ledit système comprenant :
- une première chambre (1) comprenant :
∘ une première entrée (1A) pour le passage d'une première quantité d'air dudit compartiment (H) à ladite première chambre (1),
∘ un premier moyen d'ouverture/fermeture (11A) pour ouvrir/fermer ladite première entrée (1A) afin de permettre/empêcher le passage de ladite première quantité d'air à travers ladite première entrée (1A),
∘ une première sortie (1B) pour le passage d'une deuxième quantité d'air de ladite première chambre (1) vers ledit compartiment (H),
∘ un deuxième moyen d'ouverture/fermeture (11B) pour ouvrir/fermer ladite première sortie (1B) afin de permettre/empêcher le passage de ladite deuxième quantité d'air à travers ladite première sortie (1B),
∘ une seconde entrée (1A') pour le passage d'une troisième quantité d'air de l'extérieur vers ladite première chambre (1),
∘ un troisième moyen d'ouverture/fermeture (11A') pour ouvrir/fermer ladite seconde entrée (1A') afin de permettre/empêcher le passage de ladite troisième quantité d'air à travers ladite seconde entrée (1A'),
∘ une seconde sortie (1B') pour le passage d'une quatrième quantité d'air de ladite première chambre (1) vers l'extérieur,
∘ un quatrième moyen d'ouverture/fermeture (11B') pour ouvrir/fermer ladite seconde sortie (1B') afin de permettre/empêcher le passage de ladite quatrième quantité d'air à travers ladite seconde sortie (1B'),
- une seconde chambre (2) comprenant :
∘ un premier moyen de ventilation (21) pour générer un premier flux d'air et diriger ledit premier flux d'air à l'intérieur de ladite seconde chambre (2),
∘ un second moyen de ventilation (22) pour générer un second flux d'air et diriger ledit second flux d'air à l'extérieur de ladite seconde chambre (2),
∘ un dispositif de stockage de chaleur (20) contenant à l'intérieur un mélange, où ledit dispositif de stockage de chaleur (20) est agencé à l'intérieur de ladite seconde chambre (2) et ledit mélange comprend un matériau à changement de phase capable de passer d'un état solide à un état liquide, lorsque la température interne de ladite seconde chambre (2) est supérieure à une température de fusion prédéterminée (T_{f}), et dudit état liquide audit état solide, lorsque la température interne de ladite seconde chambre (2) est inférieure à une température de solidification prédéterminée (Tₛ),
ladite seconde chambre (2) étant agencée à l'intérieur de ladite première chambre (1) de manière à diviser ladite première chambre (1) en une première partie (11) et une seconde partie (12), où ladite première partie (11) comprend ladite première entrée (1A), ladite seconde entrée (1A') ainsi que ledit premier moyen de ventilation (21), et ladite second partie (12) comprend ladite première sortie (1B), ladite seconde sortie (1B') et ledit second moyen de ventilation (22),
- un premier moyen de mesure de température (S1) pour mesurer une première température t₁, où ladite première température t₁ est la température interne dudit compartiment (H),
- un deuxième moyen de mesure de température (S2) pour mesurer une deuxième température t₂, où ladite deuxième température t₂ est la température interne de ladite seconde chambre (2), ledit deuxième moyen de mesure de température (S2) étant agencé à l'intérieur de ladite seconde chambre (2),
- un troisième moyen de mesure de température (S3) pour mesurer une troisième température t₃, où ladite troisième température t₃ est la température externe (T3),
- une unité logique de commande (5) connectée à chacun desdits moyens d'ouverture/fermeture (11A, 11B, 11A', 11B'), ainsi qu'à chacun desdits moyens de mesure de température (S1, S2, S3) et à chacun desdits moyens de ventilation (21, 22), et configurée pour :
∘ ouvrir/fermer ladite première entrée (1A) à travers ledit premier moyen d'ouverture/fermeture (11A),
∘ ouvrir/fermer ladite première sortie (1B) à travers ledit deuxième moyen d'ouverture/fermeture (11B),
∘ ouvrir/fermer ladite seconde entrée (1A') à travers ledit troisième moyen d'ouverture/fermeture (11A'),
∘ ouvrir/fermer ladite seconde sortie (1B') à travers ledit quatrième moyen d'ouverture/fermeture (11B'),
∘ effectuer une ou plusieurs comparaisons entre des températures,
∘ fermer ladite première entrée (1A) et ladite première sortie (1B), ainsi que ladite seconde entrée (1A') et ladite seconde sortie (1B'), et éteindre ledit premier moyen de ventilation (21) et ledit second moyen de ventilation (22), lorsque ladite première température t₁ est inférieure à ladite température de fusion prédéterminée (T_{f}), et lorsque ladite première température t₁ est inférieure à ladite troisième température t₃,
∘ ouvrir ladite seconde entrée (1A') et ladite première sortie (1B) et allumer ledit premier moyen de ventilation (21) et ledit second moyen de ventilation (22), lorsque ladite première température t₁ est inférieure à ladite température de fusion prédéterminée (T_{f}) et ladite première température t₁ est supérieure à ladite troisième température t₃,
∘ ouvrir ladite première entrée (1A) et ladite première sortie (1B), fermer ladite seconde entrée (1A') et ladite seconde sortie (1B') et activer ledit premier moyen de ventilation (21) et ledit second moyen de ventilation (22), lorsque ladite première température t₁ est supérieure à ladite température de fusion prédéterminée (T_{f})
∘ fermer ladite première entrée (1A) et ladite première sortie (1B), ouvrir ladite seconde entrée (1A') et ladite seconde sortie (1B'), et allumer ledit premier moyen de ventilation (21) et ledit second moyen de ventilation (22), lorsque ladite deuxième température t₂ est supérieure à ladite température de fusion prédéterminée (T_{f}) d'une valeur prédéterminée et que ladite troisième température t₃ est supérieure à ladite température de solidification prédéterminée (Tₛ),
∘ fermer ladite première entrée (1A) et ladite première sortie (1B), ouvrir ladite seconde entrée (1A') et ladite seconde sortie (1B'), et allumer ledit premier moyen de ventilation (21) et ledit second moyen de ventilation (22), lorsque ladite deuxième température t₂ est supérieure à ladite température de fusion prédéterminée (T_{f}) d'une valeur prédéterminée et que ladite troisième température t₃ est inférieure à ladite température de solidification prédéterminée (Tₛ).

2. Système selon la revendication précédente, **caractérisé en ce que** ledit mélange comprend une poudre de métal et un liant.

3. Système selon la revendication précédente, **caractérisé en ce que** ledit matériau à changement de phase est du sulfate de sodium décahydraté, ladite poudre métallique est une poudre d'aluminium et ledit liant est de l'argile.

4. Système selon la revendication précédente, **caractérisé en ce que** ledit sulfate de sodium décahydraté est compris entre 85 % et 90 % en poids, ladite poudre d'aluminium est comprise entre 2 % et 6 % en poids et ladite argile est comprise entre 6 % et 10 % en poids.

5. Système selon la revendication précédente, **caractérisé en ce que** ledit sulfate de sodium décahydraté est compris entre 88 % et 90 % en poids, ladite poudre d'aluminium est comprise entre 3 % et 6 % en poids et ladite argile est comprise entre 6 % et 7 % en poids.

6. Système selon l'une quelconque des revendications précédentes, **caractérisé en ce que** ledit dispositif de stockage de chaleur (20) comprend au moins une barre métallique (200) présentant une cavité contenant ledit mélange.

7. Système selon la revendication précédente, **caractérisé en ce que** ladite au moins une barre métallique présente une section transversale formée par un cercle (200A) et au moins un segment radial (200B), où ledit au moins un segment radial (200B) comprend une première partie s'étendant dudit cercle (200A) vers l'extérieur sur une longueur prédéterminée et une seconde partie s'étendant dudit cercle (200A) vers l'intérieur sur une seconde longueur prédéterminée.

8. Système selon la revendication précédente, **caractérisé en ce que** ladite section transversale présente une pluralité de segments radiaux (200B) équidistants les uns des autres.

9. Système selon l'une quelconque des revendications 6 à 8, **caractérisé en ce que** ledit premier moyen de ventilation (21) est connecté à une première paroi (2A) de ladite seconde chambre (2) et ledit second moyen de ventilation (22) est connecté à un seconde paroi (2B) de ladite deuxième chambre (2), opposée à ladite première paroi (2A), ledit premier moyen de ventilation (21) et ledit second moyen de ventilation (22) étant agencés le long d'un premier axe (A1, A1'), **en ce que** ladite au moins une barre métallique (200) a un axe longitudinal (L) et est agencée à l'intérieur de ladite seconde chambre (2) entre ladite première paroi (2A) et ladite seconde paroi (2B) de telle sorte que ledit axe longitudinal (L) est parallèle audit premier axe (A1, A1').

10. Système selon la revendication 9, **caractérisé en ce que** ladite seconde chambre (2) comprend un premier moyen de ventilation supplémentaire (21'), connecté à ladite première paroi (2A), et un second moyen de ventilation supplémentaire (22'), connecté à ladite seconde paroi (2B), où ledit premier moyen de ventilation supplémentaire (21') et ledit second moyen de ventilation supplémentaires (22) sont agencés le long d'un second axe (A2), parallèlement audit premier axe (A1').
